# EUROPEAN PATENT SPECIFICATION

(11) **EP 0 705 564 B1**
(45) Date of publication and mention of the grant of the patent: **04.02.2004**
(21) Application number: 95307083.6
(22) Date of filing: 06.10.1995
(51) Int. Cl.: A61B 8/00, G01S 7/52

(54) **Ultrasonic diagnostic image scanning techniques**
Verfahren zum Erzeugen einer Abbildung mit Hilfe einer Ultraschall-Abtastanordnung
Techniques de reproduction d'images diagnostiques à balayage ultrasonore

(30) Priority: 07.10.1994 US 319757; 12.06.1995 US 489668
(43) Date of publication of application: 10.04.1996
(60) Divisional application: 03100346.0
(73) Proprietor: ADVANCED TECHNOLOGY LABORATORIES, INC., Bothell, Washington 98041 (US)
(72) Inventor: Starosta, Mikhail, Snohomish, WA 98290 (US); Roundhill, David, Bothell, WA 98012 (US); Rust, David, Seattle, WA 98117 (US); Cooley, Clifford R., Seattle, WA 98117 (US)
(74) Representative: Lottin, Claudine

(56) References cited:
- EP-A- 0 130 479
- EP-A- 0 467 690
- US-A- 4 561 308
- US-A- 4 888 694

## Description

This invention relates to an echographic imaging method and an echographic imaging apparatus for scanning an image field with pulses of ultrasonic energy which are transmitted in a plurality of beam directions extending spatially adjacent to each other over said image field from one lateral extreme of said image field and through the center of said image field to an opposite lateral extreme, and for receiving echoes from the current beam direction with minimized multi-path reception and image artifacts.

The invention finds an application in improvements of ultrasonic diagnostic imaging techniques, and in particular of ultrasonic image scanning techniques which reduce the effects of temporal scanning artifacts in an ultrasonic image.

An ultrasonic imaging apparatus is already known from the patent application EP-A-0 130 479. The cited Document relates to an ultrasound equipment, illustrated by FIG.5 of said Document, which comprises a set of ultrasound transducers disposed along the circumference of a supporting member. Each of said ultrasound transducers transmits a fan-shaped beam, which scans a fan-shaped field of the object and forms a fan-shaped view. So, each fan-shaped beam has a first and a second lateral extremes.

The different transducers, each scanning a fan-shaped field from said different angles, are energized sequentially one after the other, beginning with a central projection utilizing a first transducer, and then utilizing alternately the first left transducer, then the first right transducer, then the second left transducer and then the second right transducer in order to ensure that the first and last views are obtained close in time. Thus the fan-shaped beams are energized alternately, in a diverging pattern starting from a unique central location of the first fan-shaped beam, and the fan-shaped views are formed from said fan-shaped beams. A reconstructed final image is formed from all said five fan-shaped views.

The object to be imaged can show movements during the time of formation of the five fan-shaped views. By alternating the production of the fan-shaped beams, the magnitude of the inconsistencies, due to the movements of said object between the first and last views, is reduced, because said first and last views are close in time. Thus a final image that is constructed from said five images exhibits a reduced susceptibility to motion artifacts.

Ultrasonic images can suffer from a number of image artifact problems, one of which is due to range ambiguities induced by multi-path reflections. Ultrasonic images are developed by transmitting ultrasonic pulses over a range of directions called beam directions which cover an image field of a subject being imaged, such as the interior of the human body. After each ultrasonic beam is transmitted echoes are received from along the beam direction over a predetermined depth of field. These transmission and reception sequences are repeated until beams have been scanned over and echoes gathered from along beam directions which cover the desired image field. By computing the time of flight of ultrasonic pulses and echoes together with the beam directions, the locations of specific echoes received from the image field are determined. After all of the echoes from the beams of the image field have been received and so arranged in an image format, the resultant ultrasonic image is displayed on a monitor.

It may be seen that the time required to produce an ultrasonic image is determined by the number of beams comprising the image and the sum of the times required to transmit each beam and receive the resulting echoes. Each transmit-receive sequence is followed by another in a different beam direction until the entire image field has been scanned and echoes recorded. The time required to assemble the echo information needed to display a full image establishes the rate at which consecutive images can be displayed, the frame rate. High frame rates are desirable to eliminate any disturbing flicker or hesitation in the real time display of images. Moreover, it is often desirable to increase the number of scan lines in the image to improve image quality, which reduces the frame rate. Furthermore, the transmitted image beams are often interlineated in time with narrow band Doppler pulse transmission and reception sequences for the simultaneous display of a structural image with flow information. The complete set of image and Doppler sequences can cause the time to assemble one display frame to increase substantially, and a commensurate significant decline in the frame rate of display.

These considerations have led to efforts to reduce the time of the transmit-receive imaging sequences in various ways. Attempts to reduce the scanning time have often focused on overlapping two transmit-receive sequences in time, generally by transmitting a pulse in first and second beam directions, receiving echoes from the first beam direction and then the second. This generally requires the use of separate subgroups or sub-apertures of a transducer array, such as the linear array sub-aperture sequencing shown in U.S. Pat. 4,561,308 (Bele et al.)

The problem encountered by these approaches is that the transducers receiving echoes from one beam direction can also be receiving echoes resulting from the pulse transmission in another beam direction. The possibility of such cross contamination of the received signals is heightened whenever the pulse sequencing falls below the full round trip time of a pulse and its echoes. Moreover, the inadvertent reception of echoes caused by other than the intended transmitted pulse is possible even when the full round trip time is observed. This is due to what is referred to as multi-path reception. Multi-path reception arises when a first pulse is reflected by structure so as to continue to travel through the image field, generating echoes and itself even returning to the transducer, during the reception period of a subsequent transmit-receive sequence. It is sometimes necessary to reduce these artifacts by allowing time between sequences during which the multi-path reflections become attenuated and dissipate. This is done by allowing a user to insert a waiting period of a selected length after reception of echoes and prior to the next pulse transmission. During the waiting period the repeated reflections will become attenuated by their passage through the subject being imaged. It may be appreciated that adding a waiting period to diminish these artifacts will cause an increase in the time required to assemble an image frame, and a consequent further reduction in the image frame rate.

In accordance with the principles of the present invention, a sequence of spatially scanning an ultrasonic sector image field is provided which provides a reduction in multi-path artifacts in the received echo signals. The scanning sequence is performed by symmetrically scanning beam directions alternately on respective sides of the sector.

In an embodiment, a diverging sequence begins by scanning the two central beam directions of the sector. The sequence continues by scanning outwardly from the two central beams in accurately divergent directions, alternating from one side of the sector to the other. The last two beams scanned are the two most lateral beam directions.

To reduce multi-path reception artifacts in the center of the sector a relatively long pulse repetition interval may be inserted between the transmit-receive sequences of the central beam directions, where consecutive beam scans are most closely adjacent. As the scanning sequence diverges from the center of the sector and consecutively transmitted beams become more widely separated in space, the PRI can be reduced to increase the frame rate.

In an embodiment, the scanning sequence first diverges from the center of the sector then converges, the sequence proceeding alternately outward from the sector center during one frame then back again during the next frame.

It has been found that an artifact can develop down the center of a divergently scanned image. The center line of the image is scanned as the first line scanned of each new image frame. This causes the center line to be significantly noise-free as compared to other divergently scanned lines, since an adjacent line has generally been scanned within two transmission-reception time periods. This unique characteristic of the center line can cause an artifact to appear down the center of the image in the form of a faint or dim central line.

In accordance with the principles of the present invention, the central artifact caused by divergent scanning is overcome by scanning the image in a convergent scan pattern. In a basic embodiment convergent scanning begins on one lateral extreme of the image, then scans the line on the other lateral extreme, and continues scanning alternately inward from these two lateral extremes. This effectively relocates the central artifact of the divergently scanned image to the most lateral extreme of the image where it is not noticeable.

In an embodiment, a further refinement of this technique is to divergently scan the image beginning with a different starting point in each successive image frame. The starting point in each successive frame can rotate from one line to the next, or can be randomly chosen. This variation in the starting point will dissipate the effect of the artifact by continually relocating it to a different position each frame and allowing it to be reproduced in the same place no more than once in succession.

### In the drawings:

FIGURE 1 illustrates a conventional sequential sector scanning sequence;
FIGURE 2 illustrates a sequence of alternately transmitting beams over the two halves of a sector to achieve uniform temporal beam separation on each side of the sector;
FIGURE 3 illustrates a divergent beam scanning sequence of an embodiment;
FIGURE 4 illustrates a PRI versus time plot for controlling the PRI during times of adjacent and near adjacent beam scanning;
FIGURE 5 illustrates a convergent scanning technique in accordance with the principles of the present invention; and
FIGURE 6 illustrates another convergent scanning technique in which the position of the first line changes from frame to frame.

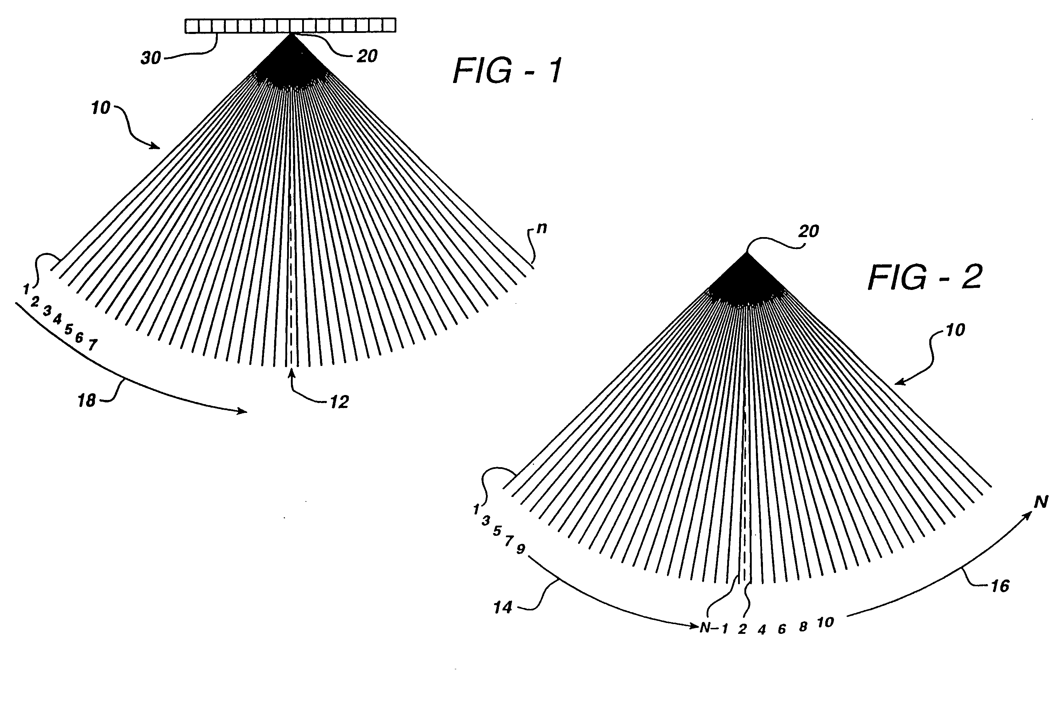

Referring first to FIGURE 1, a conventional sector scanning sequence is illustrated. The image sector 10 comprises n scan lines along which focused ultrasound pulses are transmitted and from which echoes are received by an ultrasonic transducer 30 located at or in the vicinity of the apex 20 of the sector. The transducer 30 in this example is a multi-element transducer by which an ultrasound beam can be electronically focused and steered as is known in the art on both transmit and receive. The sector area 10 which is covered by the successively transmitted beams is seen to be in the shape of a section of a circle and is drawn with a center line 12. The n transmitted beams are distributed on either side laterally of the illustrated center line 12.

Successive beams are transmitted as shown by beams numbered 1, 2, 3, and so forth beginning at the left lateral side of the sector. After a pulse is transmitted in each beam direction there is a reception period during which echoes are received by the transducer from along the beam direction. After echoes have been received from the greatest distance from the transducer in a given beam direction the receiver is turned off and the transducer's control system is readied for transmission in the next beam direction. Transmission and reception continues in this sequence and ends with the beam identified as n at the right lateral side of the sector.

It is seen in FIGURE 1 that each successive beam direction is immediately adjacent to the previous beam direction. Thus, if multi-path reflections are passing back and forth along a given beam direction they will most likely be overlapping the adjacent beam direction along which echoes are next to be received. There is a likelihood that multi-path reflections from the previous beam transmission will be received and artifacts created when the transducer is activated to begin receiving from along the adjacent beam direction.

To overcome such multi-path reception with this scanning sequence, a waiting period is inserted following each transmit-receive sequence. After echoes have been received from the maximum desired depth along one beam direction, the transmitter is inhibited for a waiting period which, together with the transmission and reception time, are referred to as the pulse repetition interval, or PRI. During the waiting period of the PRI the multi-path reflections will become attenuated by passage through the subject. After waiting for a time during which the intensity of these reflections is expected to diminish to a desired low level, the next transmit receive sequence begins in the next beam direction. By waiting for an appreciable waiting period, such multi-path artifacts can be significantly reduced, but at the expense of a corresponding significant increase in the time needed to scan all beam directions and a consequent reduction of the image frame rate, the rate determined by the time required for all n lines to be scanned and the sector image assembled and displayed.

FIGURE 2 illustrates one known approach to reducing the problem of multi-path reflection artifacts In FIGURE 2, N beam directions are scanned in the sequence of the illustrated beam numbering. The lateral beam direction 1 is scanned first. The second beam direction to be scanned is the beam direction 2 which is to the right of the center line of the sector 10. The third beam direction to be scanned is numbered 3, spatially adjacent to beam 1. The fourth beam direction scanned is labeled 4, spatially adjacent to beam 2. The sequence continues in this manner, alternating between the previously scanned beam directions of each half of the sector, and ending with the scanning of beam directions N-1 and N.

This approach reduces multi-path reflection artifacts by causing consecutively scanned beam directions to be spatially half a sector apart. Multi-path reflections along beam direction 1, for example, should have little effect on echoes received immediately thereafter from along beam direction 2. The temporal disparity between the scanning of adjacent lines is uniformly established at two PRI's. Beam direction 3 is scanned two PRI's after beam direction 1, beam direction 5 is scanned two PRI's after beam direction 3, and so forth.

This technique creates a significant temporal disparity at the center of the sector, however. There it is seen that beam direction 2, which is the second beam direction scanned, is scanned almost a full frame interval prior to adjacent beam direction N-1, which is the second-last beam direction scanned. While each half of the sector will have a pleasing appearance, there will be a distinct vertical banding down the center of the sector by reason of the sharp temporal disparity in the scanning of the adjacent central beam directions. Images scanned by this technique are often referred to as "dual wiper" images, as the vertical banding down the center will give the appearance of an automobile windshield which has been swept by two windshield wipers.

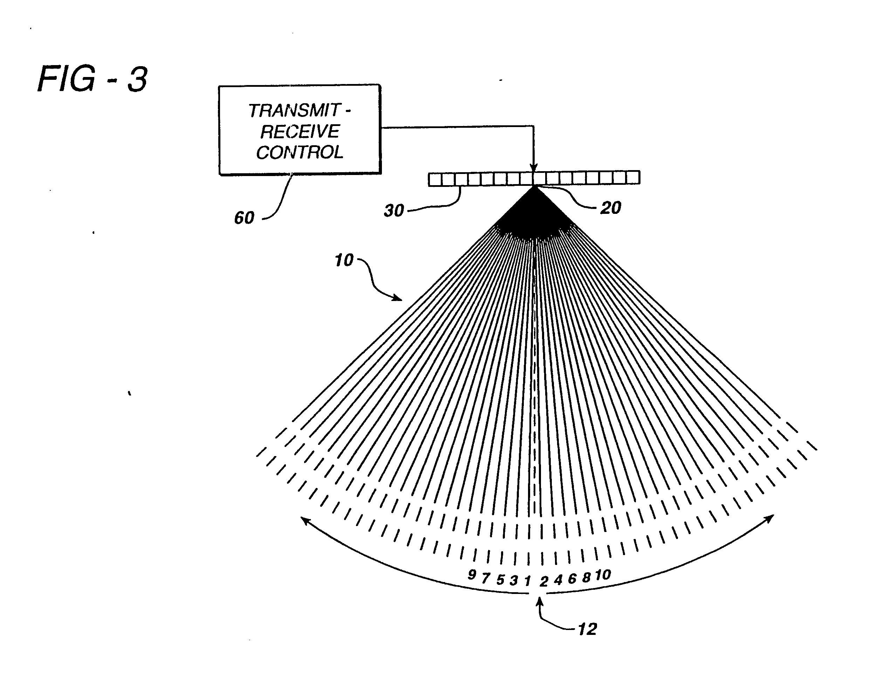

These deficiencies of the prior art are addressed by a scanning technique which is shown in FIGURE 3. In FIGURE 3 the timing of a transducer array 30 is controlled by a transmit-receive controller 60. The scanning sequence begins by sequentially scanning the two beam directions 1 and 2 on either side of the center line 12 of the sector 10. After beam direction 2 on the right side of the sector has been scanned, the beam direction 3 to the left of beam direction 1 is scanned. This is followed by the scanning of beam direction 4 to the right of beam direction 2. It is seen that the scanning sequence proceeds laterally outward from the center of the sector and alternates back and forth from one side of the sector to the other.

It is seen that this scanning technique preserves a temporal uniformity in the scanning of spatially adjacent beam directions. Each beam direction is scanned two PRI intervals apart from its spatial neighbors uniformly across the entire image. The problem of multi-path reflection artifacts is markedly reduced by the two PRI intervals between spatially adjacent beam directions. Multi-path reflections have a two PRI period of time to dissipate before a spatially adjacent beam direction is scanned.

The deficiencies of the prior art techniques are seen to be overcome everywhere except at the center of the sector, for there it is seen that spatially adjacent beam directions 1 and 2 are scanned in succession. Furthermore, there is not a significant spatial separation between the nearest lateral beam directions, such as beam directions 3 and 4.

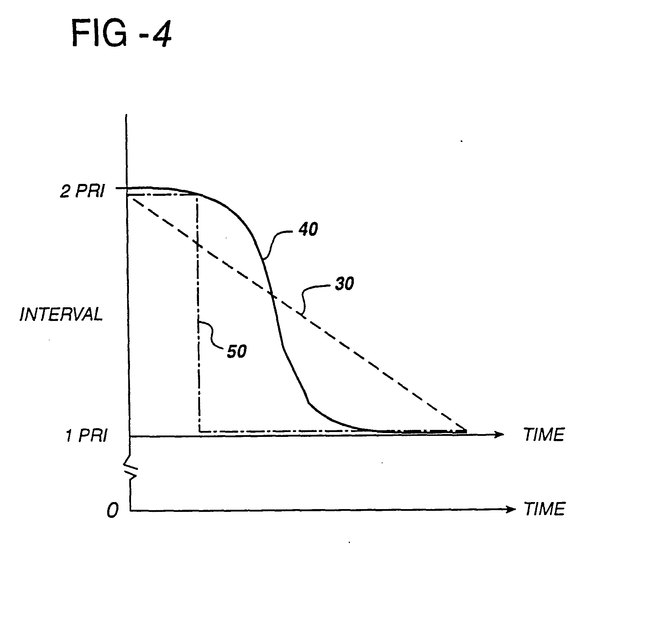

These apparent drawbacks may be addressed by using a greater PRI at the center of the sector than at lateral areas of the sector as illustrated by the graph of FIGURE 4. This graph shows techniques for varying the PRI over the time interval that the full sector is scanned. Since beam directions 1 and 2 are spatially adjacent to each other, the dashed line 30 shows that a full waiting period of one PRI is inserted between the transmit-receive sequences of these two lines. During this one PRI waiting period multipath reflections in the vicinity of beam direction 1 are given a full PRI interval to dissipate before adjacent beam direction 2 is scanned. As the consecutively scanned beams move further and further apart spatially, this waiting period is reduced toward zero at a time when it is no longer needed. Dashed line 30 shows a smooth linear reduction in this PRI interval over time from one sequence to the next.

Alternately, as broken line 50 in FIGURE 4 shows, calculations and experience may show that the waiting periods are not needed after a relatively short period of time. This broken line shows the maintenance of a full PRI interval waiting period between the initial time consecutive sequences, and a sudden change to no additional waiting time when consecutively scanned beams exhibit sufficient spatial separation and no longer benefit from the additional PRI interval. It has been found, however, that a vertical band may appear in each half of the sector between those beam directions where the shift in PRI occurred.

Another alternative waiting period variation is shown by the curve 40 in FIGURE 4. This curve shows the maintenance of a waiting period of about a full PRI interval between beam scanning sequences in the vicinity of the center of the sector. Shortly thereafter, however, there is a smooth but rapid decline in the waiting period between consecutively scanned beam directions. The waiting period decline quickly reaches zero, after which there is no waiting period between consecutively scanned beams and a uniform one PRI interval is established between the scanning times of time consecutive beams, resulting in two PRI intervals between the scanning times of the remaining adjacent beams. This PRI variation technique will yield a beneficial balance between multipath artifact reduction and maintenance of a relatively high frame rate.

A variation of the inventive scanning sequence is to scan outwardly from the center of the sector during one image frame, then inwardly from the lateral edges of the sector during the next successive frame. The sequence alternates back and forth between inward and outward scanning during successive image frames. While providing the benefits enumerated above for the preferred embodiment, this variation has the characteristic of a frame to frame variation in the temporal scanning of each beam direction. After the central beam directions 1 and 2 have been scanned at the beginning of the scanning period for the first frame, almost two frame intervals pass before they are scanned at the end of the second frame scanning period. These beam directions are then scanned immediately thereafter at the beginning of the third frame scanning period. Consequently, this varying sequence may not be as completely free of the effects of temporal scanning nonuniformity as the preferred embodiment.

It has been found that the divergent scanning sequence of FIGURE 3 can result in a slight vertical artifact at the center of the sector due to the start of the sequence at the center of the sector. The last beam direction scanned for a given image is one of the most lateral beam directions. The first beam direction scanned at the start of a new image is beam direction 1 at the center of the sector. Beam direction 1 is transmitted at a time when the preceding transmissions have been at the most lateral extremities of the previous image. Hence, a considerable amount of time has passed since any transmission occurred at the sector center, leaving the center significantly free of echo artifacts from previous transmissions. The echoes received from along beam direction 1 will thus be significantly free of artifacts and noise.

This is not the case of beam directions 2, 3, and so on, even with two PRI intervals between transmissions. Some faint reflections or reverberations may still remain in the vicinity of these beam directions. Beam direction 1 was scanned at a time when almost a full image period has passed since a nearby disturbance occurred and will be significantly free of artifacts. Consequently the echoes from beam direction 1 can appear fainter than those of the surrounding beams, simply due to the exceedingly noise free environment from which they were received. The central line of the sector can therefore appear different from its neighbors, an "artifact" in the image.

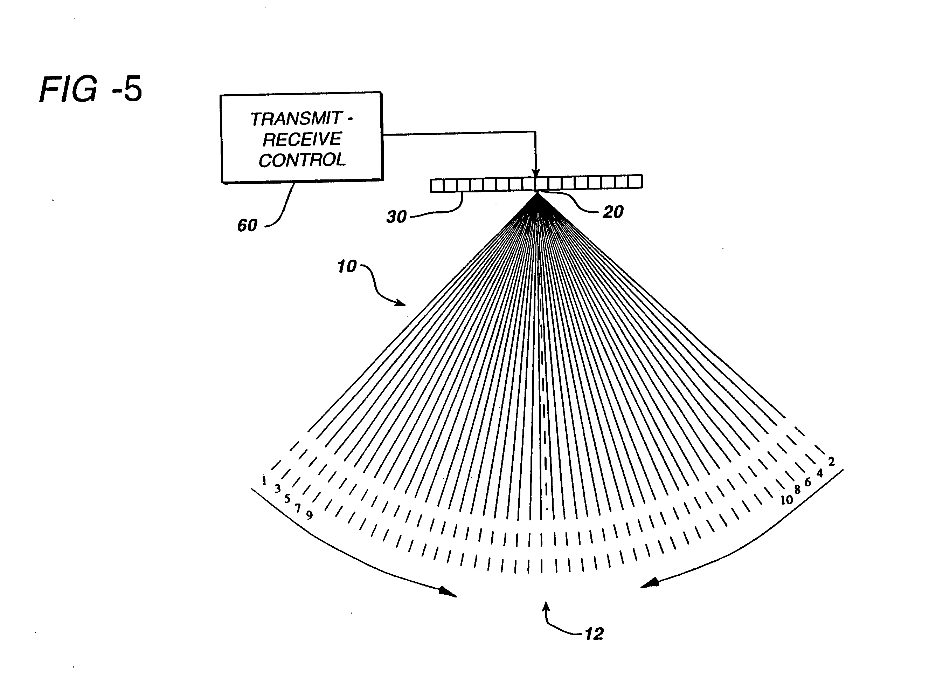

In accordance with the principles of the present invention, this temporal artifact at the image center can be eliminated by convergent scanning of the sector as illustrated in FIGURE 5. As shown in this drawing, the scanning of the sector begins with beam direction 1 at one lateral extreme of the image. The second beam direction 2 scanned is at the other lateral extreme of the image. Alternate scanning continues from side to side as shown by the numbered beam directions, ending at the center of the image. This causes the center beams to be temporally related and substantially equally affected by surrounding remnant reverberations from previous transmissions, eliminating the faint appearance down the center of the image.

As the scanning sequence approaches the center of the image time sequential beams approach each other spatially, increasing the possibility of multipath reception. This condition can be addressed by increasing the PRI spacing of the transmitted beams, the concept represented by the curves of FIGURE 4. But in the case of convergent scanning the curves of the graph are reversed. Instead of beginning with a long PRI interval at the center then shortening the PRI interval as the beams diverge, the sequence of FIGURE 5 begins with short PRI intervals and ends with longer PRI intervals as the scanning beams converge at the center; essentially, the curves are reversed in time.

It may be appreciated that the effective result of convergent scanning as compared with divergent scanning is to relocate the first beam scanned in a given frame, and hence the artifact, to the most lateral extremes of the image, where it is unnoticeable. To fully eliminate this temporal artifact, transmissions without echo reception could be employed at either lateral side of the sector prior to the commencement of the beam transmissions from which echoes are to be received.

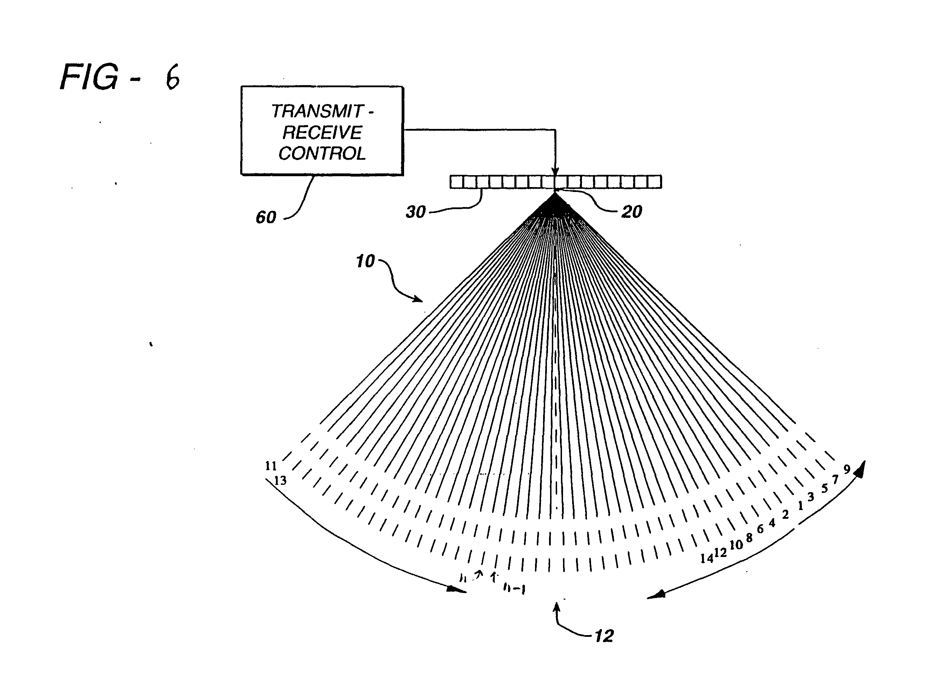

This recognition of the effective result of convergent scanning leads to a further refinement, which is to change the location of beam direction 1, the first beam scanned, from one frame to the next. FIGURE 6 illustrates the scanning sequence beginning five lines in from the right lateral side of the sector. From the perspective of this point of the sector, the scanning sequence is diverging, as lines 1, 2, 3, 4, 5, etc. sequentially diverge from beam directions 1 and 2. After beam 9 has scanned the right lateral side of the sector, beam 11 scans the left lateral side and subsequent odd numbered beams scan inward from the left side of the sector. From the perspective of the left side of the sector the scanning sequence is converging, and will end five lines to the left of the center line 12.

When the next frame is scanned, the first beam direction is located in a different beam direction. The first beam direction could be rotationally changed, proceeding to the sixth or fourth line in from the right lateral side of the sector, it could be randomly chosen, or it can vary in some other manner from frame to frame. This first beam alteration technique has the effect of eliminating the faint first line artifact by continually relocating it and thereby uniformly blending it into the real time image sequence. The blending may be effected by the frame rate of the real time display, or successive frames can be averaged to eliminate the artifact.

While the present invention has been described in terms of a sector comprising a radial array of beam directions, it will be appreciated that the inventive scanning sequence is also applicable to other scanning formats such as the rectangular format of a linear scan. In the linear format, the ultrasonic beams are transmitted in parallel directions from groups of transducer elements of a linear transducer array. The linear scan will proceed in the same manner as the sector scan, beginning with the two most lateral beams and proceeding alternately to scan beam directions on the inward side of the two initial beam directions and proceeding toward the center. Trapezoidal and other beam patterns are also possible.

## Claims

1. An echographic imaging method for scanning an image field (10) with pulses of ultrasonic energy which are transmitted in a plurality of beam directions extending spatially adjacent to each other over said image field from one lateral extreme of said image field and through the center of said image field to an opposite lateral extreme, and for receiving echoes from the current beam direction with minimized multi-path reception and image artifacts, comprising steps of:
transmitting in a first beam direction (1) and then in a second beam direction (2), which directions are substantially respectively located at said lateral extremes of said image field; and thereafter
transmitting in a third beam direction (3) which is adjacent and laterally interior to said first beam direction and then in a fourth beam direction (4) which is adjacent and laterally interior to said second beam direction; and then
continuing to scan said image field by transmitting in beam directions which are alternately on opposite lateral interior sides of previously transmitted beam directions according to a convergent pattern of scanning.

2. The method of Claim 1, wherein said first (1) and third (3) beam directions are on one side of the center of said image field, and said second (2) and fourth (4) beam directions are on the other side of said center of said image field.

3. An ultrasound echographic apparatus for scanning an image field (10) of a subject extending in substantially opposite directions from the middle of said field to lateral extremes of said field with beams of ultrasound which are transmitted in a pattern in which the beams are spatially adjacent to each other over said image field, and for receiving echoes from the current beam with minimized multi-path reception and image artifacts, comprising means for:
sequentially transmitting first and second ultrasonic beams (1,2) at the respective lateral sides of said image field; and
sequentially transmitting subsequent beams alternately on either lateral side of said image field, wherein successive beam paths are located at decreasing lateral locations with respect to the locations of said first and second ultrasonic beam location according to a converging pattern.

4. The apparatus of Claim 3, further comprising means for varying the intervals of time between transmission of time sequential beams:
from relatively lesser intervals between beams transmitted in the vicinity of the lateral extremes of said image field
to relatively greater intervals between the times of successive transmission of more centrally located beams.

## Patentansprüche

1. Echografisches Bildgebungsverfahren zum Abtasten eines Bildfeldes (10) mit Impulsen mit Ultraschallenergie, die in einer Vielzahl von Strahlrichtungen gesendet werden, die sich räumlich nebeneinander über das genannte Bildfeld von einem seitlichen Rand des genannten Bildfeldes und durch die Mitte des genannten Bildfeldes zu einem gegenüberliegenden seitlichen Rand erstrecken, und zum Empfangen von Echos aus der aktuellen Strahlrichtung mit einem Minimum an Mehrwegeempfang und Bildartefakten, das folgende Schritte umfasst:
Senden in einer ersten Strahlrichtung (1) und dann in einer zweiten Strahlrichtung (2), wobei die Richtungen im Wesentlichen jeweils an den genannten seitlichen Rändern des genannten Bildfeldes angeordnet sind; und anschließend
Senden in einer dritten Strahlrichtung (3), die neben und seitlich nach innen in Bezug auf die genannte erste Strahlrichtung liegt, und dann in einer vierten Strahlrichtung (4), die neben und seitlich nach innen in Bezug auf die genannte zweite Strahlrichtung liegt; und dann
Fortsetzen der Abtastung des genannten Bildfeldes durch Senden in Strahlrichtungen, die gemäß eines konvergenten Abtastmusters abwechselnd auf den gegenüberliegenden Innenseiten der vorher gesendeten Strahlrichtungen liegen.

2. Verfahren nach Anspruch 1, wobei die genannte erste (1) und die genannte dritte (3) Strahlrichtung auf einer Seite der Mitte des genannten Bildfeldes liegen und die genannte zweite (2) und die genannte vierte (4) Strahlrichtung auf der anderen Seite der genannten Mitte des genannten Bildfeldes liegen.

3. Echografisches Ultraschallgerät zum Abtasten eines Bildfeldes (10) eines Objektes, das sich von der Mitte des genannten Feldes in im Wesentlichen entgegen gesetzten Richtungen zu seitlichen Rändern des genannten Feldes erstreckt, mit Ultraschallstrahlenbündeln, die nach einem Muster gesendet werden, bei dem die Strahlenbündel räumlich nebeneinander in dem genannten Bildfeld liegen, und zum Empfangen von Echos von dem aktuellen Strahlenbündel mit einem Minimum an Mehrwegeempfang und Bildartefakten, wobei das echographische Ultraschallgerät Mittel für folgende Aufgaben umfasst:
Sequentielles Senden von ersten und zweiten Ultraschallstrahlenbündel (1, 2) auf den entsprechenden Seiten des genannten Bildfeldes; und
Sequentielles Senden von nachfolgenden Strahlenbündeln abwechselnd auf den beiden Seiten des genannten Bildfeldes, wobei die aufeinander folgenden Strahlenwege gemäß einem konvergierenden Muster an abnehmenden seitlichen Positionen in Bezug auf die Positionen des genannten ersten und des genannten zweiten Ultraschallstrahlenbündels liegen.

4. Gerät nach Anspruch 3, das ferner Mittel umfasst, um die Zeitintervalle zwischen der Übertragung von zeitlich aufeinander folgenden Strahlen folgendermaßen zu verändern:
von relativ kürzeren Intervallen zwischen Strahlenbündeln, die in der Nähe der seitlichen Ränder des genannten Bildfelds gesendet werden,
zu relativ längeren Intervallen zwischen den Zeitpunkten der aufeinander folgenden Sendevorgänge von Strahlenbündeln, die mehr in der Mitte liegen.

## Revendications

1. Procédé d'imagerie échographique pour balayer un champ d'image (10) avec des impulsions d'énergie ultrasonore qui sont transmises dans une pluralité de directions de faisceau s'étendant l'une à côté de l'autre dans l'espace sur ledit champ d'image d'un extrême latéral dudit champ d'image et à travers le centre dudit champ d'image vers un extrême latéral opposé, et pour recevoir des échos de la direction de faisceau en cours avec une réception par trajets multiples et des artefacts d'image minimisés, comprenant les étapes suivantes :
transmission dans une première direction de faisceau (1), puis dans une deuxième direction de faisceau (2), lesquelles directions se trouvent sensiblement respectivement auxdits extrêmes latéraux dudit champ d'image, et ensuite
transmission dans une troisième direction de faisceau (3) qui est adjacente et latéralement intérieure par rapport à ladite première direction de faisceau, puis dans une quatrième direction de faisceau (4) qui est adjacente et latéralement intérieure par rapport à ladite deuxième direction de faisceau, et puis
poursuite du balayage dudit champ d'image en transmettant dans des directions de faisceau qui se trouvent alternativement sur des côtés intérieurs latéraux opposés de directions de faisceau transmis précédemment suivant un motif de balayage convergent.

2. Procédé suivant la revendication 1, dans lequel lesdites première (1) et troisième (3) directions de faisceau se trouvent d'un côté du centre dudit champ d'image, et lesdites deuxième (2) et quatrième (4) directions de faisceau se trouvent de l'autre côté dudit centre dudit champ d'image.

3. Appareil échographique ultrasonore pour balayer un champ d'image (10) d'un sujet s'étendant dans des directions sensiblement opposées à partir du milieu dudit champ vers des extrêmes latéraux dudit champ avec des faisceaux d'ultrasons qui sont transmis en un motif dans lequel les faisceaux sont adjacents dans l'espace les uns aux autres sur ledit champ d'image, et pour recevoir des échos du faisceau en cours avec une réception par trajets multiples et des artefacts d'image minimisés, comprenant des moyens destinés à :
transmettre séquentiellement des premier et deuxième faisceaux ultrasonores (1,2) aux côtés latéraux respectifs dudit champ d'image, et
transmettre séquentiellement des faisceaux suivants alternativement de chaque côté latéral dudit champ d'image, dans lequel des trajets de faisceau successifs se trouvent en des emplacements latéraux décroissants par rapport aux emplacements desdits premier et deuxième faisceaux ultrasonores suivant un motif convergent.

4. Appareil suivant la revendication 3, comprenant en outre des moyens destinés à varier les intervalles de temps entre la transmission de faisceaux séquentiels dans le temps :
d'intervalles relativement moindres entre des faisceaux transmis à proximité des extrêmes latéraux dudit champ d'image
à des intervalles relativement supérieurs entre les temps de transmission successive de faisceaux situés plus au centre.
